# EUROPÄISCHE PATENTANMELDUNG

(11) **EP 0 523 514 A1**
(43) Veröffentlichungstag der Anmeldung: **20.01.1993**
(21) Anmeldenummer: 92111459.1
(22) Anmeldetag: 07.07.1992
(51) Int. Cl.: G02B 6/28, B26F 1/00, B29D 11/00

(54) **Verfahren zur Herstellung eines planaren optischen Kopplers**

(30) Priorität: 09.07.1991 DE 4122639
(71) Anmelder: HOECHST AKTIENGESELLSCHAFT, D-65926 Frankfurt am Main (DE)
(72) Erfinder: Sixl, Hans, Prof. Dr., W-6230 Frankfurt am Main 80 (DE); Brockmeyer, Andreas, Dr., W-6237 Liederbach (DE); Groh, Werner, Dr., Charlotte, NC 28211 (US)

(57) **Zusammenfassung**

Verfahren zur Herstellung eines optischen Kopplers beliebiger Geometrie aus einer polymeren Folie, dadurch gekennzeichnet, daß sich die Folie auf einer Platte befindet, die mit Hilfe eines zuvor erwärmten Stanzwerkzeuges unter Anwendung von Druck in die gewünschte Form gestanzt wird.

Das erfindungsgemäße Verfahren ermöglicht es, eine Vielzahl von Kopplern innerhalb einer kurzen Zeit zu fertigen, wobei die auf diese Weise hergestellten Koppler einen sehr homogenen Mischbereich und gute optische Eigenschaften besitzen.

Die Folie befindet sich hierbei auf einer Platte, beispielsweise einer Metall- oder Kunststoffplatte, und wird mit Hilfe eines zuvor erwärmten Stanzwerkzeuges unter Anwendung von Druck in die gewünschte Form gestanzt. Bei dem erfindungsgemäßen Verfahren unterscheidet man allgemein zwischen einem Andruckstanzen, einem Durchstanzen und einem doppelseitigen Stanzen. Für jede dieser drei verschiedenen Stanztechniken ist es notwendig, zuvor ein spezielles Stanzwerkzeug anzufertigen.

Im Fall des Andruckstanzens ist das Stanzmesser (1) so gearbeitet, daß die Schnittkante an der Spitze keilförmig verläuft (Fig. 1). Während des Stanzvorganges drückt das Stanzmesser gleichmäßig auf die Polymer-Folie (2), die auf einer planaren Metallplatte (3) liegt. An dem Stanzmesser (1) können nachträglich Stellschrauben angebracht werden, so daß die Messerlage nachträglich verändert werden kann. Hierdurch wird eine gleichmäßige Schnittiefe gewährleistet. Aus der Polymer-Folie (2) werden so die im Querschnitt quadratischen Kanäle (9,10,11) geformt. Geeignete Stanzmaterialien sind allgemein alle transparenten optischen Kunststoffe, beispielsweise Polymethylmethacrylat (PMMA), Polycarbonat (PC) oder Polyethylenterephthalat (PETP). Aber auch andere Materialien können bei diesem Verfahren Anwendung finden, wobei darauf zu achten ist, daß diese bei den jeweiligen Verarbeitungstemperaturen (80°-300°C) eine spezifische Viskosität im Bereich von 10 bis 10 Pas besitzen sollten, damit kein Reißen oder Brechen der Stanzmaterialien auftritt.

## Beschreibung

In passiven Lichtwellenleiternetzen dienen Koppler als optische Bauelemente zum Aufteilen der Lichtsignale von ankommenden Lichtwellenleitern auf abgehende Lichtwellenleiter. Derartige Koppler bestehen aus einem transparenten Körper, welcher an der Lichteintritts- und an der Lichtaustrittsseite mit Lichtwellenleitern verbunden ist. Neben den Kopplern, die durch Zusammenkleben oder Zusammenschmelzen von transparenten Formkörpern mit Lichtwellenleitern entstehen, sind auch Koppler bekannt, zu deren Herstellung Lichtwellenleiterbündel verdrillt und an der Verdrillstelle verstreckt werden (Agarwal, Fiber Integr. Optics 6 (1), 27 - 53, 1987).

In passiven Lichtwellenleiternetzen dienen Koppler als optische Bauelemente zum Aufteilen, aber auch zum Zusammenfügen der Lichtsignale zweier ankommender Lichtwellenleiter. Die Aufteilung der Lichtleistung von einer Eingangsfaser auf mehrere Ausgangsfasern sowie die Vereinigung der Lichtleistung von zwei oder mehreren Fasern geschieht im Mischbereich des Kopplers. Allgemein unterscheidet man zwischen faseroptischen und planaroptischen Kopplern. Zur Herstellung planaroptischer Koppler für Polymer-Lichtwellenleitersysteme sind bisher im wesentlichen zwei Methoden bekannt.

Zum einen besteht die Möglichkeit, auf ein Substrat über eine Mehrfachbeschichtung eine Photoresistschicht aufzubringen, welche beispielsweise mit Hilfe einer auf dem Substrat liegenden Maske und UV-Strahlung strukturiert wird (A. Boiarski, SPIE, Bd. 840, S. 29(1987)). Die unbelichteten Bereiche ergeben hierbei nach dem Entwickeln einen im Querschnitt quadratischen Wellenleiterkanal, in den Polymer-Lichtwellenleiter mit einem Durchmesser von 250 µm eingelegt werden können. Der Freiraum zwischen den Fasern wird anschließend mit einem geeigneten optischen Gießharz ausgefüllt.

Ein weiteres Verfahren zur Herstellung planaroptischer Koppler ist aus der DE-A-39 19 263 bekannt. Bei diesem Verfahren werden Polymer-Lichtwellenleiter in einer Vorrichtung parallel angeordnet und unter Druck und Zuführung von Wärme miteinander verschmolzen. Die Vorrichtung besteht hierbei aus einem Unterteil mit einer darin eingelassenen Rinne und einem Oberteil mit einem Stempel, welcher in seiner Form der Form der Rinne entspricht.

Der wesentliche Nachteil der bekannten Herstellungsverfahren besteht zum einen in der aufwendigen und zeitintensiven, teilweise schlecht reproduzierbaren Einzelstückfertigung und zum anderen darin, daß die nach dem Stand der Technik hergestellten Koppler relativ hohe Einfügedämpfungen und Exzeßverluste besitzen.

Die Aufgabe der vorliegenden Erfindung besteht darin, ein Verfahren zu entwickeln, welches es erlaubt, Koppler auf einfache Weise kostengünstig und mit einem relativ geringen Zeitaufwand herzustellen. Ferner sollte ein solches Verfahren kontrolliert durchführbar sein und es ermöglichen, Koppler mit niedrigen Ausgangsdämpfungen und geringen Schwankungen der Leistungen zwischen den Ausgangsfasern zu produzieren.

Die vorliegende Erfindung löst diese Aufgabe und betrifft ein Verfahren zur Herstellung eines optischen Kopplers beliebiger Geometrie aus einer polymeren Folie. Die Folie befindet sich hierbei auf einer Platte, beispielsweise einer Metall- oder Kunststoffplatte, und wird mit Hilfe eines zuvor erwärmten Stanzwerkzeuges unter Anwendung von Druck in die gewünschte Form gestanzt. Bei dem erfindungsgemäßen Verfahren unterscheidet man allgemein zwischen einem Andruckstanzen, einem Durchstanzen und einem doppelseitigen Stanzen. Für jede dieser drei verschiedenen Stanztechniken ist es notwendig, zuvor ein spezielles Stanzwerkzeug anzufertigen. Hierzu wird mittels einer computergesteuerten Fräsmaschine (CNC) aus Vollmaterial ein dem zu stanzenden Objekt entsprechendes Stanzwerkzeug hergestellt und nach bekannten Verfahren gehärtet.

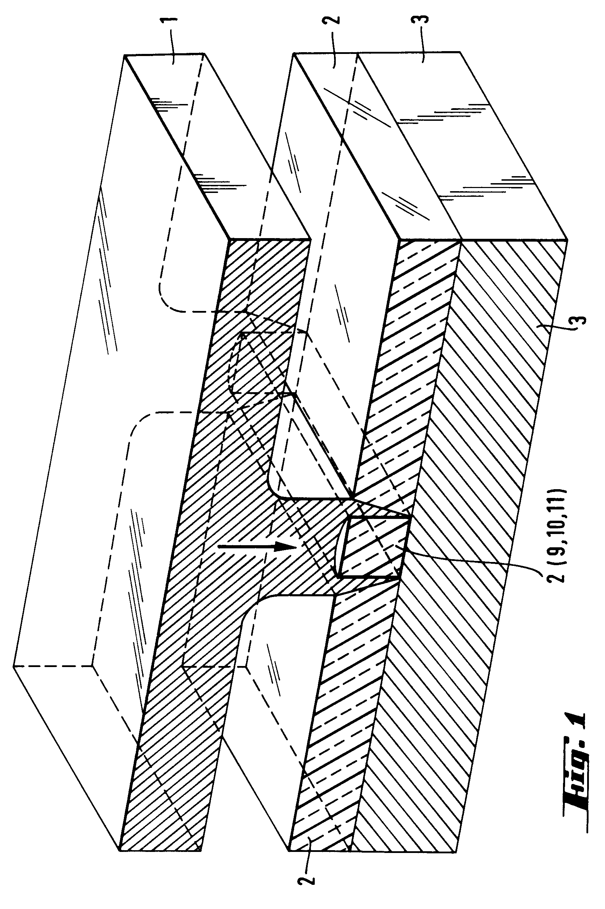

Im Fall des Andruckstanzens ist das Stanzmesser (1) so gearbeitet, daß die Schnittkante an der Spitze keilförmig verläuft (Fig. 1). Während des Stanzvorganges drückt das Stanzmesser gleichmäßig auf die Polymer-Folie (2), die auf einer planaren Metallplatte (3) liegt. An dem Stanzmesser (1) können nachträglich Stellschrauben angebracht werden, so daß die Messerlage nachträglich verändert werden kann. Hierdurch wird eine gleichmäßige Schnittiefe gewährleistet. Aus der Polymer-Folie (2) werden so die im Querschnitt quadratischen Kanäle (9, 10, 11) geformt.

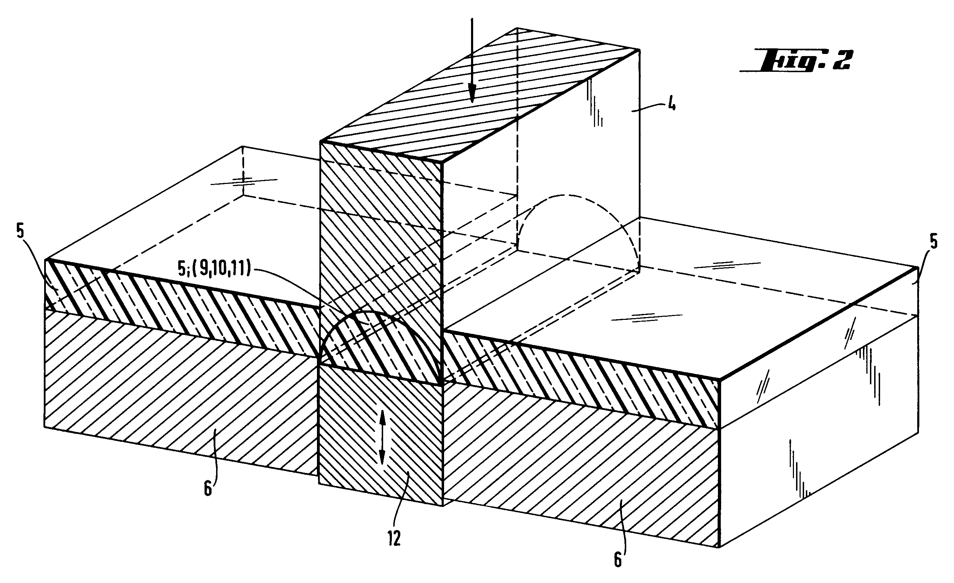

Im Gegensatz zum Andruckstanzen wird beim Durchstanzen durch eine feststehende Unterlage gestanzt (Fig. 2). Auch hier ist die Unterlage eine Metallplatte (6), die mit Schlitzfräsungen versehen ist. Mit Hilfe des Stanzmessers (4) wird aus der polymeren Folie das Kopplerbauteil herausgeschnitten und mit Hilfe des Stanzmessers durch die Öffnungen in der Unterlage herausgestoßen. Der Vorteil der Durchstanztechnik liegt in einer geringen Abnutzung des Stanzwerkzeuges, da dieses nicht direkt mit der starren Unterlage in Berührung kommt. Ein federnd nachgiebiges Druckstück (12) ermöglicht die Formung der Folie (5) zum im Querschnitt halbkreisförmigen Kanal (9, 10, 11).

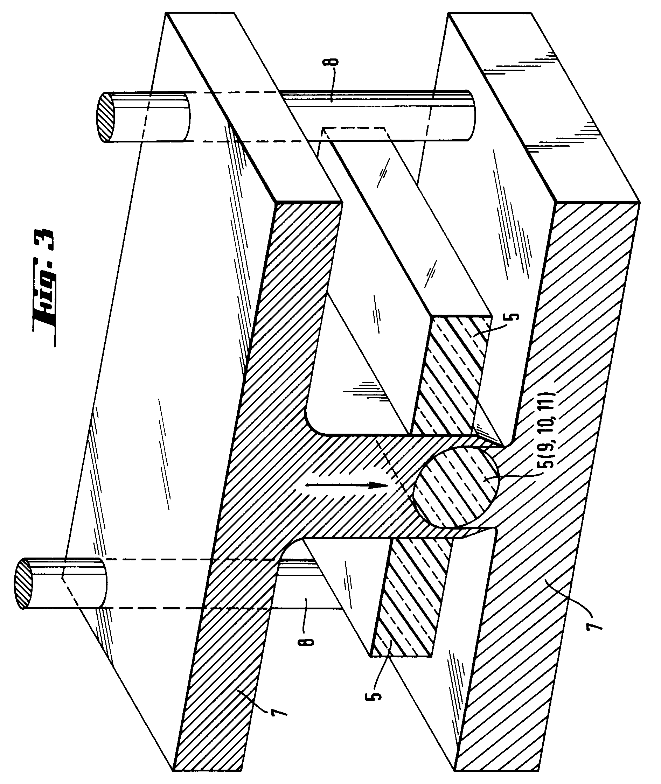

Im Unterschied zum Andruckstanzen und zum Durchstanzen ist bei der doppelseitigen Stanztechnik das Stanzwerkzeug so gearbeitet, daß zwei Stanzmesser (7) ineinandergleiten (Fig. 3). Durch zusätzlich am Werkzeug angebrachte Führungsstifte (8) ist beispielsweise eine saubere Führung der Messer gewährleistet. Hierdurch sind z.B., wie in Fig. 3 gezeigt, im Querschnitt kreisförmige Kanäle (9, 10, 11) aus der Folie (5) formbar.

Durch eine Erwärmung des Stanzwerkzeuges unmittelbar vor dem Stanzvorgang über die Glasübergangstemperatur des Folienmaterials wird eine Rißbildung oder ein Brechen dieses Materials vermieden und gleichzeitig eine bessere Kantenausbildung erreicht. In einer bevorzugten Ausführungsform wird das Werkzeug mindestens 20°C über die Glasübergangstemperatur (T_{g}) erwärmt, d.h. auf eine Temperatur im Bereich von 80 bis 300°C, insbesondere im Bereich von 90 bis 200°C, je nach eingesetztem Folienmaterial. Bei Verwendung von weniger spröden Materialien, vorzugsweise bei der Verwendung einiger Thermoplaste, insbesondere bei Fluorthermoplasten, kann gegebenenfalls eine vorherige Erwärmung des Stanzwerkzeugs entfallen, sofern dies zu keiner Zerstörung des Materials führt.

Für das erfindungsgemäße Verfahren geeignete Stanzmaterialien sind allgemein alle transparenten optischen Kunststoffe, beispielsweise Polymethylmethacrylat (PMMA), Polycarbonat (PC) oder Polyethylenterephthalat (PETP). Aber auch andere Materialien können bei diesem Verfahren Anwendung finden, wobei darauf zu achten ist, daß diese bei den jeweiligen Verarbeitungstemperaturen (80 - 300°C) eine spezifische Viskosität im Bereich von 10 bis 10⁶ Pas besitzen sollten, damit kein Reißen oder Brechen der Stanzmaterialien auftritt.

Die für das erfindungsgemäße Verfahren eingesetzten Folien können allgemein eine beliebige Dicke besitzen. Zur Herstellung von Lichtwellenleitern werden vorzugsweise Folien verwendet, die eine Dicke zwischen 0,25 und 1 mm haben (einlagige Folie). Bei Verwendung mehrerer Lagen Folien kann dieser Bereich auch überschritten werden, so daß die Dicke bei dreilagigen Folien insbesondere im Bereich von 0,25 bis 1,5 mm liegt.

In einer besonderen Ausführungsform können anstelle von einlagigen Folien auch mehrlagige oder bereits beschichtete transparente optische Kunststoffolien eingesetzt werden. So ist es beispielsweise möglich, Folien einzusetzen, die aus drei Lagen oder Schichten bestehen, wobei die obere und die untere Schicht einen niedrigeren Brechungsindex als die mittlere Schicht aufweisen sollten. Bevorzugt besitzen die Ober- und die Unterschicht einen Brechungsindex, der im Bereich von 1,32 bis 1,49, vorzugsweise im Bereich von 1,32 bis 1,45, liegt und die Mittelschicht einen Brechungsindex im Bereich von 1,35 bis 1,59, vorzugsweise im Bereich von 1,35 bis 1,54. Während des Stanzvorgangs, insbesondere bei der Durchstanztechnik, ist es auf diese Weise möglich, durch die vorherige Erwärmung des Stanzwerkzeuges eine Verformung der Kanten zu erzielen und so eine möglichst vollständige Umschließung des Folienmaterials der Mittelschicht mit dem Folienmaterial der Ober- und Unterschicht zu erreichen und auf diese Weise eine Kernmantelstruktur zu erzeugen.

Bei Verwendung einer einlagigen Folie ist auch ein nachträgliches Beschichten, beispielsweise mit einem Lack, möglich. Auch hier sollte zur Erzeugung einer Kernmantelstruktur der Lack einen niedrigeren Brechungsindex als das Folienmaterial besitzen. Geeignete Lacke sind beispielsweise UV- und thermisch härtbare Lacke, insbesondere Lacke auf Basis von Epoxydharzen oder Silikonkautschuk.

Mit Hilfe des erfindungsgemäßen Verfahrens ist es möglich, Koppler einer beliebigen Geometrie, beispielsweise Sternkoppler, Y-Koppler oder symmetrische und asymmetrische Koppler herzustellen.

Die mit dem erfindungsgemäßen Verfahren hergestellten Koppler zeichnen sich durch besonders niedrige Einfügedämpfungen und Exzeßverluste aus. So liegen beispielsweise die Exzeßverluste bei Y-Kopplern im Bereich von 0,5 bis 2 dB und die Einfügedämpfungen im Bereich von 4 bis 6 dB, bei Sternkopplern betragen die Exzeßverluste 0,5 bis 4,5 dB und die Einfügedämpfungen 3,0 bis 18,0 dB.

Im Gegensatz zum mechanischen Schnitt beruht das erfindungsgemäße Verfahren auf einer Schmelzverformung und verringert somit die mechanische Beanspruchung des Materials. Bei Verwendung eines halbrunden Messerprofils ist es möglich, die Kanten einseitig (Andruckstanzen, Durchstanzen) oder beidseitig (doppelseitiges Stanzen) zu verformen, wodurch eine Anpassung an die runde Fasergeometrie gewährleistet ist. Ein direktes Spleißen von polymeren optischen Fasern mit gestanzten optischen Kopplern oder nachträgliches Anbringen von Fasern mit Hilfe von Steckern ist somit möglich.

Das erfindungsgemäße Verfahren ermöglicht es, eine Vielzahl von Kopplern innerhalb einer kurzen Zeit zu fertigen, wobei die auf diese Weise hergestellten Koppler einen sehr homogenen Mischbereich und gute optische Eigenschaften besitzen.

### Beispiele

### Beispiel 1

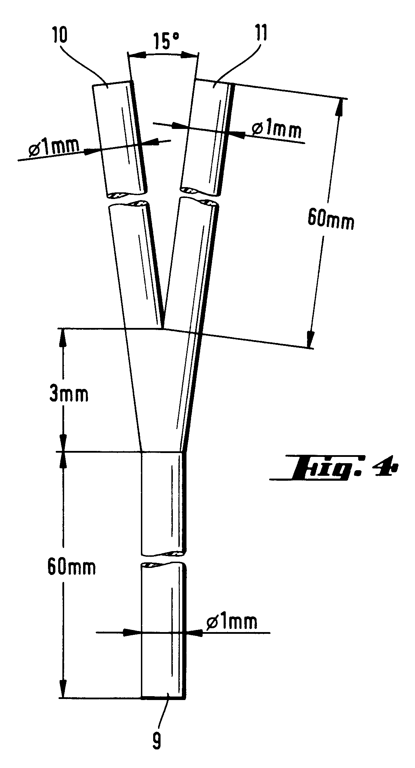

Aus einer Polycarbonatfolie mit einer Dicke von 1 mm wurde mittels der Andruckstanztechnik ein Y-Koppler herausgestanzt (Stanztiegel, Fa. Krause-Biagosch, Bielefeld). Die Y-Geometrie besaß einen Öffnungswinkel von 15°, eine Mischbereichslänge von 3 mm sowie eine jeweilige Zuleitungslänge von 60 mm (Fig. 4). Das Stanzwerkzeug wurde unmittelbar vor dem Stanzvorgang auf 165°C erhitzt. Nachträglich wurde auf den so gefertigten optischen Koppler ein optischer Mantel (Epoxyd-Klarlack, SICRALAN SL 1000, Gesellschaft für Oberflächentechnik) aufgebracht. Die Härtung des Lacks erfolgte bei 120°C über einen Zeitraum von 45 Minuten. Der so aufgebrachte Lack besaß einen Brechungsindex von 1,52 und war bis zu 180°C beständig. Die Einfügedämpfung mit der im Kanal (1) befindlichen Faser als Eingang und den in den Kanälen (2) und (3) befindlichen Fasern als Ausgang betrug 4,8 dB bzw. 5,1 dB. Die Abweichung der Ausgänge untereinander betrug 0,3 dB.

### Beispiel 2

Analog zu Beispiel 1 wurde ein Y-Koppler, hier aber mit Hilfe der Durchstanztechnik, gestanzt. Die Einfügedämpfung lag im Bereich von 4,4 bis 4,6 dB.

### Beispiel 3

Zur Durchführung des doppelseitigen Stanzens wurden zwei Stanzwerkzeuge angefertigt (s. Fig. 3). Auch hier wurde eine Polycarbonatfolie verwendet und ein Y-Koppler hergestellt. Die Einfügedämpfung des so gestanzten Kopplers betrugen 3,8 bis 4,0 dB. Die Leistungsschwankung am Ausgang betrug somit 0,2 dB.

## Patentansprüche

1. Verfahren zur Herstellung eines optischen Kopplers beliebiger Geometrie aus einer polymeren Folie, dadurch gekennzeichnet, daß sich die Folie auf einer Platte befindet, die mit Hilfe eines zuvor erwärmten Stanzwerkzeuges unter Anwendung von Druck in die gewünschte Form gestanzt wird.

2. Verfahren zur Herstellung eines optischen Kopplers nach Anspruch 1, dadurch gekennzeichnet, daß es sich bei dem Stanzvorgang um ein Andruckstanzen, ein Durchstanzen oder um ein doppelseitiges Stanzen handelt.

3. Verfahren zur Herstellung eines optischen Kopplers nach Anspruch 1, dadurch gekennzeichnet, daß das Stanzwerkzeug unmittelbar vor dem Stanzvorgang über die Glasübergangstemperatur des Materials der zu stanzenden Folie erwärmt wird.

4. Verfahren zur Herstellung eines optischen Kopplers nach Anspruch 1, dadurch gekennzeichnet, daß die polymere Folie aus Polymethylmethacrylat, Polycarbonat oder Polyethylenterephthalat besteht.

5. Verfahren zur Herstellung eines optischen Kopplers nach Anspruch 1, dadurch gekennzeichnet, daß die ausgestanzte Folie mit einem Lack überzogen wird, welcher einen niedrigeren Brechungsindex als das Folienmaterial aufweist.

6. Verfahren zur Herstellung eines optischen Kopplers nach Anspruch 5, dadurch gekennzeichnet, daß es sich um einen UV- oder thermisch härtbaren Lack handelt.

7. Verfahren zur Herstellung eines optischen Kopplers nach Anspruch 1, dadurch gekennzeichnet, daß die Folie aus drei Schichten besteht, wobei die obere und die untere Schicht eine niedrigeren Brechungsindex als die mittlere Schicht aufweisen.

8. Verfahren zur Herstellung eines optischen Kopplers nach Anspruch 7, dadurch gekennzeichnet, daß die Ober- und die Unterschicht einen Brechungsindex im Bereich von 1,32 bis 1,49 und die Mittelschicht einen Brechungsindex im Bereich von 1,35 bis 1,59 besitzt.

9. Verfahren nach Anspruch 1, dadurch gekennzeichnet, daß das Folienmaterial bei einer Temperatur im Bereich von 80 bis 300°C eine spezifische Viskosität von 10 bis 10⁶ Pas besitzt.

10. Verfahren nach Anspruch 1, dadurch gekennzeichnet, daß der optische Koppler für den Fall, daß es sich um einen Y-Koppler handelt, eine Einfügedämpfung im Bereich von 4 bis 6 dB und für den Fall, daß es sich um einen Sternenkoppler handelt, eine Einfügedämpfung im Bereich von 3,0 bis 18,0 dB besitzt.

11. Verfahren zur Herstellung eines optischen Kopplers nach Anspruch 1, dadurch gekennzeichnet, daß die Folie für den Fall, daß es sich um eine einlagige Folie handelt, eine Dicke im Bereich von 0,25 bis 1,0 mm und für den Fall, daß es sich um eine dreilagige Folie handelt, eine Dicke im Bereich von 0,25 bis 1,5 mm besitzt.
